# EUROPÄISCHE PATENTSCHRIFT

(11) **EP 0 741 848 B1**
(45) Veröffentlichungstag und Bekanntmachung des Hinweises auf die Patenterteilung: **14.06.2000**
(21) Anmeldenummer: 95905133.5
(22) Anmeldetag: 11.01.1995
(51) Int. Cl.: F16L 58/04, B29C 47/02

(54) **ROHRLEITUNG FÜR SYSTEME IN KRAFTFAHRZEUGEN UND HERSTELLUNGSVERFAHREN**
PIPES FOR SYSTEMS USED IN MOTOR VEHICLES AND PROCESS FOR PRODUCING THE SAME
TUBULURE POUR SYSTEMES UTILISES DANS DES VEHICULES A MOTEUR ET SON PROCEDE DE FABRICATION

(30) Priorität: 13.01.1994 DE 4400811
(43) Veröffentlichungstag der Anmeldung: 13.11.1996
(73) Patentinhaber: Fulton-Rohr GmbH & Co. KG, 68766 Hockenheim (DE)
(72) Erfinder: SCHNECK, Werner, D-67436 Speyer (DE)
(74) Vertreter: Dreiss, Fuhlendorf, Steimle & Becker, Patentanwälte
(86) Internationale Anmeldenummer: EP9500091
(87) Internationale Veröffentlichungsnummer: WO9519522

(56) Entgegenhaltungen:
- EP-A- 0 132 218
- DE-C- 3 820 615
- US-A- 3 503 823
- US-A- 5 026 451
- Dialog Inforamtion Service, File 351, World Patent Indrex 81-94, Dialog accession no. 003907735, WPI accession no. 84-053280/09, SUMITOMO METAL IND KK: "Prodn. of metal pipe covered with corrosion resistant coating by *extruding* *thermoplastic* resin blended with fibrous material around the pipe; POLYETHYLENE POLYPROPYLENE PVC POLYVINYL CHLORIDE NYLON POLYAMIDE" JP 59012846, A, 840123, 8409 (Basic)
- Dialog Information Service, File 351, World Patent Indrex 81-94, Dialog accession no. 009522697, WPI accession no. 93-216238/27, MITSUBISHI PLASTICS IND LTD: "Cold working of polyamide resin-coating laminated metal sheet - by drawing and folding after absorption of water into resin layer, used for housing of electrolytic capacitor or cosmetic container" JP, 5138812, A, 930608, 9327 (Basic)
- Dialog Information Service, file 351, World patent Indrex 81-94, Dialog accossion no. 010054037, WPI accession no. 94-321748/40, SANOH KOGYO KK: "Coating of synthetic resin onto metal pipe- includes feeding metal pipe, while heating, longitudinally, extruding synthetic resin into concentric form with pipe, and adhering resin to outer periphery of pipe" JP, 6246811, A, 940906, 9440 (Basic)

## Beschreibung

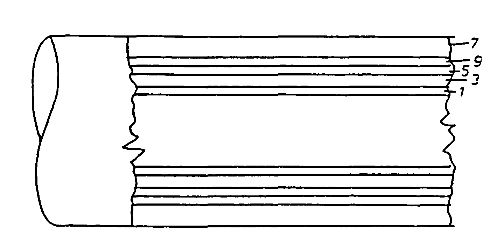

Die Erfindung bezieht sich auf eine Rohrleitung für ein Brems-, Kraftstoff- oder Hydrauliksystem in Kraftfahrzeugen gemäß dem Oberbegriff von Anspruch 1 sowie ein Verfahren zum Herstellen einer solchen Rohrleitung. Eine Rohrleitung für Brems- oder Kraftstoffsysteme in Kraftfahrzeugen mit den Merkmalen des Oberbegriffs von Anspruch 1 ist beispielsweise von dem Stand der Technik bekannt, der in der DE 38 20 615 C1 in Sp. 1, z. 30 bis 44 in Verbindung mit deren Fig. 3 bezeichnet ist.

Insbesondere Bremsleitungen und Kraftstoffleitungen, aber auch andere gegen Schädigung durch den Kraftfahrzeuggebrauch sensible Leitungen, z.B. für hydraulische Verstellungen, müssen den Beanspruchungen im Verkehr dauerhaft gewachsen sein, also für Zeiträume von Jahren und mehr.

In solchen Verwendungsbereichen werden Verschleißfestigkeit, größtmögliche Sicherheit z.B. gegen ein Zerbrechen, Reißen oder Bersten aufgrund des Innendrucks, Steinschlagfestigkeit und hohe Korrosionsbeständigkeit, insbesondere gegen Außeneinwirkungen aus dem Straßenbereich, z.B. Streusalz, verlangt. Derzeit werden dabei in großem Umfang Rohrleitungen mit Metallrohren aus Stahl verwendet.

Für Bremsleitungen eignen sich insbesondere doppelgewickelte Stahlrohre, während einwandig längsnahtverschweißte Stahlrohre z.B. für Kraftstoffleitungen verwendet werden.

Bekannte, jetzt in großem Umfang zum Einsatz kommende Rohrleitungen auf Basis eines inneren Stahlrohrs, von denen auch der Oberbegriff von Anspruch 1 ausgeht, werden zum Korrosionsschutz in einem ersten Herstellungsschritt auf ihrer Außenseite verzinkt, insbesondere durch galvanische Verzinkung, aber auch durch Flüssigverzinkung. Auf dem so verzinkten Rohr wird in einem zweiten Arbeitsschritt durch Eintauchen in ein Chromatierungsbad eine äußere Chromatierungsschicht ausgearbeitet, die zur Korrosionsschutzverbesserung der Zinkschicht dient. Dabei sind eine ganze Reihe von Chromatierungsverfahren verwendbar, wie z.B. die Olivchromatierung, die Gelbchromatierung und die Transparentchromatierung. Die Verfahren der verschiedenen Chromatierungen von galvanisch verzinkten Stahlteilen, insbesondere auch das Verfahren der Olivchromatierung, sind in DIN 50941 beschrieben (siehe Tabelle 1: Verfahrensgruppen beim Chromatieren). Weiterhin sind die Chromatierungen verzinkter Stahlteile in der VW-Liefervorschrift TL-VW 217 unter 4.1.2 und 4.1.3 aufgeführt. Um die chromatierte Verzinkung des Stahlrohrs weiterhin gegen Korrosionseinwirkungen, insbesondere Nässeeinwirkungen, im Straßenbereich mit Streusalz, Steinschlag usw. zu schützen, wird das verzinkte und chromatierte Stahlrohr mit einer Kunststoffmantelschicht umgeben. Der dabei verwendete Kunststoff sollte korrosionsbeständig sein und eine genügend hohe Festigkeit und Verschleißbeständigkeit aufweisen. Im Falle einer Verletzung, insbesondere durch Steinschlag, oder einem Loslösen der äußeren Kunststoffmantelschicht, und bei einer leicht entstehenden Verletzung der Chromatierungsschicht löst sich das Zink der Außenverzinkung - je nach Dicke - über einen Zeitraum von mehreren Jahren auf, bis das innere Stahlrohr bloßgelegt ist. Man beobachtet dabei das Entstehen sogen. Weißrostes des Zinks und schließlich den roten Rost des Stahls, nachdem die Zinkschicht verbraucht ist. Die Kunststoffmantelschicht sollte daher gut auf dem inneren Rohr haften und sich weder durch mechanische Beanspruchung noch im Falle einer lokalen Verletzung der Kunststoffmantelschicht loslösen, weil sonst eine Korrosion des inneren Rohres stattfinden kann, die von außen der Rohrleitung nicht angesehen werden kann. Der verwendete Kunststoff selbst sollte dabei nicht nur gegen äußere Einflüsse, wie Streusalz, Straßenschmutz und ähnliches, korrosionsbeständig sein, sondern auch gegen im Kraftfahrzeugbereich eingesetzte Flüssigkeiten, wie Treibstoff, Bremsflüssigkeit und Akkumulatorsäure. Weiterhin sollte er eine gewisse Temperaturbeständigkeit besitzen, da insbesondere im Motorbereich höhere Temperaturen auftreten können.

Allgemein wird dabei eine doppelte Sicherheit angestrebt. So soll auch bei Ausfall der ersten Sicherheitsmaßnahme, der Verwendung einer möglichst dauerhaften Kunststoffmantelschicht, der verbleibende Metallkern als zweite Sicherheitsmaßnahme noch viele Jahre, z.B. mindestens fünf Jahre, korrosionsbeständig bleiben, was man mit dem außen verzinkten und chromatierten Stahlrohr trotz der Rostanfälligkeit von Stahl erreichen kann. Stahl ist dabei in manchen Aspekten beispielsweise Aluminum überlegen. Doppeltgewickelte Stahlrohre nach DIN 74234 zeichnen sich gegenüber Aluminiumrohren durch gerade bei Bremsleitungen existentielle Eigenschaften aus.Besonders wichtig sind die hohe Berstdruckfestigkeit und die hohe Schwingungsfestigkeit. Hinzu kommen eine Reihe weiterer, später auch numerisch tabellarisch angesprochener Eigenschaften. Besonders bedeutsam ist auch die elastische flexible Verlegbarkeit mit leichter Biegsamkeit bei der Montage ohne Beschädigungsgefahr schon beim Verlegen. Die Verwendung von kunststoffummantelten Aluminiumrohren, deren Einsatz im eingangs angesprochenen Anwendungsbereich von Rohrleitungen für System in Kraftfahrzeugen schon propagiert wurde (Prospekte der Firma Hydro Aluminium Heat Transfer a.d. Postboks 50, Hydrovey 6, DK 6270 Tonder, mit dem Titel "HYCOT™ HYDRO ALUMINIUM Automotive"), hat daher bisher nur wenig Eingang in die Praxis gefunden. Für extreme Anforderungen an Korrosionsschutz verwenden Porsche und Audi besonders teure Rohre auf Kupferbasis mit etwa 10% Ni und etwas Fe, obwohl sonst die früher viel verwendeten Cu-Rohre kaum noch Anwendung finden.

Seit vielen Jahren wurde dabei als Kunststoff für die Kunststoffmantelschicht vornehmlich Polyvinylfluorid (PVF), ein duroplastartiger Kunststoff, verwendet. Dieser Kunststoff weist eine sehr gute Korrosionsbeständigkeit sowie eine gute Temperaturbeständigkeit auf. Da sich PVF nicht direkt in Lösungsmittel lösen läßt, wird es üblicherweise kleingemahlen und mit einem Lösungs- bzw. Trägermittel als Dispersion in einem Dispersionsbad angesetzt. Das verzinkte und chromatierte Stahlrohr wird zur Aufbringung des Kunststoffs in das Dispersionsbad eingetaucht und mit der Flüssigkeit benetzt. Anschließend trocknet das Lösungsmittel, so daß eine etwa 15 µm dicke Kunststoffschicht ausgebildet wird, wobei das verdampfende Lösungsmittel aus Gründen des Umweltschutzes aufgefangen werden muß. Dickere Kunststoffschichten lassen sich dabei nur in mehreren Arbeitsschritten erreichen, da bei Auftragen größerer Flüssigkeitsmengen auf das Rohr eine Tröpfchenbildung oder Ausbuchtung auftritt, die zu einer unsymmetrischen Kunststoffbeschichtung der Rohrleitung führt. Weiterhin ist PVF mit einem Preis von etwa DM 27,-- pro Liter Dispersionsbad, das zu 80% aus Lösungsmittel besteht, bereits als Rohstoff sehr teuer. Das PVF bei dieser Aufbringungsweise eine relativ dünne schuppige Struktur aufweist, ergibt sich keine besonders hohe Festigkeit und Verschleißbeständigkeit, und man hat daher insbesondere Defizite in der Steinschlagfestigkeit.

PVF kann jedoch mit sehr guter Haftbeständigkeit auf ein außen verzinktes Stahlrohr aufgebracht werden, wenn das verzinkte Stahlrohr chromatiert ist. Insbesondere diese hohe Haftbeständigkeit von PVF auf einer Olivchromatierung hat zu der großen Verbreitung dieses Kunststoffes beigetragen.

Neben Stahlrohren werden mindestens seit ca. zehn Jahren in Kraftfahrzeugen auch Aluminiumrohre als kunstoffummantelte Rohrleitungen angeboten, bei denen die Kunststoffummantelung aufextrudiert ist. Die Aluminiumrohre können dabei entweder einwandig nahtlos gezogen oder einwandig längsnahtverschweißt werden. In dem Prospekt der Hüls AG mit dem Titel "Rohre und Druckschläuche aus VESTAMID®" und der Prospektnummer 42.01.011, 2. Auflage, vom Oktober 1991, Seite 38, wird ein Verfahren beschrieben, in dem ein Polyamid, hier das sogen. Polyamid 12 mit dem Handelsnamen 'VESTAMID Z4881", durch Extrudieren auf vorbehandelte Aluminiumrohre aufgetragen wird, um speziell auch für den Einsatz im Automobilbau bestimmte Rohrleitungen-zu fertigen. Die erwähnten nachteiligen Eigenschaften von kunststoffummantelten Aluminiumrohren, wie die geringe Berstdruckfestigkeit und beschränkte Flexibilität, bleiben dabei jedoch bestehen.

Rohrleitungen für Brems-, Kraftstoff- oder Hydrauliksysteme in Kraftfahrzeugen sind als Massenartikel anzusehen, deren Änderungsparameter begrenzt sind.

Der Erfindung liegt nunmehr die Aufgabe zugrunde, eine Rohrleitung mit einem kunststoffummantelten Stahlrohr - und damit im Falle doppelt gewickelter Stahlrohre, insbesondere auch hoher Berstdruckfestigkeit und hoher Schwingungsfestigkeit - für die genannten Anwendungen im Kraftfahrzeugbereich sowie ein Verfahren zur Herstellung einer solchen Rohrleitung zu schaffen, die dauerhaft korrosionsbeständig, temperaturbeständig und verschleißfest ist und dabei auch dauerhaft steinschlagfest ist und eine hinreichende Haftbeständigkeit auf dem Stahlrohr besitzt.

Diese Aufgabe wird bei einer Rohrleitung gemäß dem Oberbegriff von Anspruch 1 durch dessen kennzeichnende Merkmale gelöst, wobei das Verfahren nach Artspruch 3 eine bevorzugte Herstellungsweise für die Gewährleistung der angestrebten Eigenschaften der Rohrleitung angibt.

Das aus der zum Oberbegriff von Anspruch 1 genannten DE 38 20 615 C1 bekannte kunststoffummantelte Stahlrohr weist zwischen der metallischen Oberfläche und einer Polyvinylfluoridummantelung eine Zwischenschicht aus Epoxidharz auf. Auf diese Zwischenschicht wird die Kunstatoffummantelung aus Polyvinylfluorid aufgebracht, indem das Polyvinylchlorid in einem Lösemittel dispergiert wirden und in welches das Rohr eingetaucht wird oder mit welchem das Rohr besprüht wird. Dadurch ergeben sich begrenzte Schichtdicken, die nicht immer ausreichend sind, um einen Steinschlagschutz zu gewähren. Um diesen Nachteil zu überwinden, ist es erforderlich, die Kunststoffummantelung in mehreren Arbeitsgängen aufzutragen.

Aus der US-PS 5 026 451 ist ein kunststoffummanteltes Stahlrohr bekannt, welches im Erdreich verlegt wird. Dieses Stahlrohr wird hergestellt, indem auf das Stahlrohr eine flüssige Epoxid-Primer-Schicht aufgetragen, die bei Temperaturen zwischen 135 °C und 200 °C teilweise ausgehärtet wird, dann wird eine Klebstoffschicht aufgetragen und schließlich eine Thermoplastschicht aufextrudiert, solange die Epoxid-Primer-Schicht und die Klebstoffschicht noch nicht ausgehärtet sind. Direkt nach dem Extrudieren werden mittels eines ringförmigen Werkzeuges sämtliche Schichten auf das Stahlrohr gepresst, um die gewünschte innige Verbindung mit diesem zu erzielen. Nachteilig an diesem Stahlrohr ist, dass die gewünschte innige Verbindung zwischen Stahlrorh und Kunststoffummantelung nur durch ein aufwendiges temperatur- und zeitgesteuertes Herstellungsverfahren erreicht wird.

Versuche der Anmelderin haben dagegen ergeben, daß extrudiertes Polyamid überraschenderweise hinreichend gut auf einer Chromatierung der Außenverzinkung eines Stahlrohrs haften bleiben kann. Die Stärke der Kunststoffschicht macht sie auch sehr resistent gegen äußere Verletzung, so daß die geringere Haftfähigkeit nicht von entscheidendem Einfluß ist.

Somit bestand bisher zu Unrecht das Vorurteil, daß nur Thermoplaste wie PVF, die in flüssiger Form in einem Bad mit Lösungsmitteln aufgetragen werden, auf einer Chromatierungsschicht eines außen verzinkten Stahlrohres eine ausreichende Haftbeständigkeit besitzen.

Außerdem wird durch Extrudieren die Verwendung von Lösungsmitteln vermieden, was sehr umweitschonend und bei entsprechenden umweltschützenden Auflagen kostengünstig ist.

Die Kunststoffmantelschicht einer Rohrleitung gemäß der Erfindung läßt sich preiswert und in einem Arbeitsgang in solchen Dicken erreichen, daß insbesondere auch eine dauerhafte Steinschlagfestigkeit erzielt werden kann, die bisher bei kunststoffummantelten Stahlrohren trotz aller Bemühungen in dieser Richtung unbekannt war. In der Tat läßt sich bei einer Wandstärke der Kunststoffmantelschicht unter 100µm kaum von wirklicher Steinschlagfestigkeit sprechen.

Überraschenderweise lassen sich sogar Gütemerkmale auch in Richtung der Korrosionsbeständigkeit erreichen, für die man bisher allein die erwähnte sehr teuere Kupferbasislegierung mit etwa 10% Ni und etwas Fe für geeignet gehalten hat. Insgesamt erhält man nach der Erfindung durch eine neuartige Kombination an sich bekannter Mittel ein kostengünstiges Produkt höchster Güte für einen in vielerlei Hinsicht kritischen Anwendungsbereich. Für den vorliegenden Massenartikel, dessen Ausfall sogar lebensbedrohend sein kann, ist dies ein überraschender, großer Schritt nach vorne.

Die Verwendung von Polyamid empfiehlt sich, da Polyamid vergleichsweise preiswert ist und auf Olivchromatierung gut haftet. Polyamid besitzt eine höhere Festigkeit und Verschleißbeständigkeit als die bislang verwendete PVF-Kunststoffe.

Eine sehr gute Haftigkeit hat sich insbesondere bei einer Rohrleitung nach Anspruch 2 unter Verwendung eines Polyamids auf Basis von Laurinlactam ergeben, wie es beispielsweise von der Firma Hüls unter den Handelsnamen VESTAMID L2140 oder VESTAMID Z4881, das auch das Polyamid 12 bezeichnet wird, vertrieben wird.

Die gute Haftbeständigkeit wird gewährleistet durch eine zwischen der Olivchromatierung und der Kunststoffmantelschicht ausgebildete Verzahnungsschicht.

Bei einem Herstellungsverfahren nach Anspruch 3 wird dabei das zu beschichtende Rohr ungefähr auf die Temperatur des zu extrudierenden Polyamids gebracht und das so beschichtete Rohr anschließend in einem Wasserbad abgeschreckt. Durch ein solches Herstellungsverfahren wird insbesondere die Ausbildung einer Verzahnungsschicht nach Anspruch 1 unterstützt.

Die Erfindung wird nun im folgenden in der Zeichnung näher erläutert, die einen Querschnitt durch ein Rohr gemäß der Erfindung zeigt.

Die Zeichnung zeigt eine Rohrleitung, bei der auf ein Stahlrohr 1 eine Zinkschicht 3 aufgetragen ist. Das Stahlrohr ist dabei entweder ein doppeltgewickeltes Stahlrohr gemäß der DIN 74 234 entsprechend ISO-Norm 4038 oder aber ein einwandiges Stahlrohr gemäß DIN 2393. Dabei kann bei einem doppeltgewickelten Stahlrohr herstellungstechnisch bedingt eine dünne Schicht aus Kupferlot auf der Außenseite des Stahlrohrs verblieben sein, die für die anschließende Verzinkung zwar unerwünscht ist, jedoch keine prinzipiellen Probleme aufwirft. Die Wandstärken betragen dabei 0,5 bis 1 mm für einwandig längsnahtgeschweißte sowie für doppeltgewickelte Stahlrohre. Der Außendurchmesser des unbeschichteten doppeltgewickelten Stahlrohr beträgt dabei 3,2 bis 12 mm, während der Außendurchmesser des unbeschichteten längsnahtgeschweißten einwandigen Stahlrohrs dabei 3,2 bis 12 mm beträgt. Bei Verwendung als Bremsleitung beträgt der Außendurchmesser 4,75 mm oder 6,0 mm, bei Verwendung als Kraftstoffleitung 6,0 mm, 8,0 mm oder 10 mm, vorzugsweise 8,0 mm.

Nach der Herstellung sind die doppelt gewickelten Stahlrohre (gemäß DIN 74234) innen und außen metallblank verkupfert. Aus beidseitig galvanisch verkupfertem Stahlband hergestellt, werden sie nach dem Pofilieren ohne jeden Zusatzwerkstoff unter Schutzgas hartgelötet. Die für das Hartlöten erforderliche Cu-Beschichtung hat dabei jeweils eine Stärke von ca. 3 µm. Die Oberflächen solcher doppelt gewickelter Stahlrohre sind glatt, frei von Schuppen oder Walz- und Ziehfedern, wie sie bei gezogenen Rohren auftreten können, und ohne Zunder. Bei gestreckten, ungerichteten Längen gelten vorzugsweise folgende Werte für unterschiedliche Außendurchmesser der doppelt gewickelten Stahlrohre:

| | | | | | | |
|---|---|---|---|---|---|---|
| Rohraußendurchmesser (mm) | 4,75 | 5,0 | 6,0 | 8,0 | 9,5 | 10,0 |
| Berstdruck (Bar) | 1100 | 940 | 800 | 570 | 470 | 450 |
| Max. Betriebs innendruck (bar) | 410 | 380 | 320 | 230 | 190 | 180 |
| Zugfestigkeit Rₘ (N/mm²) | 310 - 410 | | | | | |
| Streckgrenze Rₑ (N/mm²) | 290 (max.) | | | | | |
| Bruchdehnung L₀ | 11,3 Fo:min, 25% | | | | | |
| Aufweitung nach DIN 50135 | 20% vorn Innendurchmesser | | | | | |

Die Verzinkung kann entweder durch Flüssigverzinkung (Feuerverzinkung) oder vorzugsweise durch galvanische Verzinkung erfolgen. Bei einer galvanischen Verzinkung beträgt die Schichtdicke, die Zinkschicht 10 bis 30 µm, vorzugsweise 15 oder 25 µm, während durch Flüssigverzinken Schichtdicken bis etwa 200 µm erreicht werden. Bei der Flüssigverzinkung bildet sich dabei bekannterweise eine Übergangsschicht zwischen dem Stahlrohr und der Zinkschicht aus, die hier nicht eingezeichnet ist.

Auf der Zinkschicht wird in bekannter Weise die Olivchromatierungsschicht 5 ausgebildet, indem das verzinkte Rohr in ein Olivchromatierungsbad getaucht wird. Dabei bilden sich Chromate auf der Zinkschicht aus, die einen Korrosionsschutz bewirken. Die Gesamtdicke der Zinkschicht und der Chromatschicht beträgt etwa 15 µm oder 25 µm.

Auf der Chromatschicht wird im letzten Arbeitsschritt durch Extrudieren eine Polyamidschicht 7 aufgetragen, deren Dicke etwa 100 bis 500 µm, vorzugsweise etwa 125 bis 175 µm, beträgt. Vorzugsweise werden Schichtdicken von etwa 150 µm aufgetragen.

Bei dem Rohr ist zwischen der Polyamidschicht 7 und der Olivchromatierungsschicht 5 eine Verzahnungsschicht 9 ausgebildet ist. Eine solche Verzahnungsschicht ist insbesondere bei Verwendung eines Polyamids der Firma Hüls AG, das als Polyamid 12 und unter dem Handelsnamen VESTMID L2140 der VESTAMID Z4881 vertrieben wird, im Schliffbild festgestellt worden.

Beim Auf extrudieren der Polyamidschicht wird dabei das Rohr etwa auf die Temperatur des zu extrudierenden Polyamids aufgeheizt, die etwa bei 240 bis 260° C liegen kann. Dadurch wird eine besonders gute Haftbeständigkeit des Polyamids auf der Olivchromatierungsschicht erreicht. Die genannte Angleichung der Temperatur des Rohres an die des zu extrudierenden Polyamids bedeutet dabei keine Temperaturgleichheit im strengen Sinne, jedoch mindestens eine solche Annäherung der Temperaturverhältnisse, daß im Gegensatz zum Extrudieren auf ein kaltes Rohr ein späteres Abpellen der Kunststoffmantelschicht vom Rohr vermieden wird. In der Regel wird der Temperaturunterschied bei der Temperaturangleichung höchstens einige Grad, allenfalls bis ca.± 20° C oder auch bis ca .± 30° C, ausmachen. Es mögen aber auch noch größere Temperaturdifferenzen beim Extrudieren denkbar sein.

Es mag sein, daß beim Aufheizen des chromatierten verzinkten Stahlrohrs auch eine gewisse Aufrauhung der Chromatschicht entsteht, die sich dann mit dem aufextrudierten Polyamid unter Bildung der erwähnten Verzahnungsschicht besonders abpellfest und allgemein haftbeständig verbindet. Nach dem Abschrecken der erzeugten Rohrleitung im Wasserbad oder einem anderen Flüssigkeitsbad ist dann die Rohrleitung bereits mechanisch ausreichend widerstandsfähig für die Weiterverarbeitung, z.B. zum Weitertransport auf Rollen.

## Patentansprüche

1. Rohrleitung für ein Brems-, Kraftstoff-, oder Hydrauliksystem in Kraftfahrzeugen mit einem inneren Stahlrohr (1), das eine Außenverzinkung (3) mit zusätzlicher äußerer Olivchromatierung (5) aufweist, die von einer Kunststoffmantelschicht (7) umhüllt ist, dadurch gekennzeichnet, dass im Übergangsbereich zwischen der Olivchromatierung (5) und der Kunststoffmantelschicht (7) eine Verzahnungsschicht (9) ausgebildet ist, und dass die Kunststoffmantelschicht (7) eine direkt auf die Olivchromatierung (5) durch Extrudieren aufgebrachte Schicht aus Polyamid ist.

2. Rohrleitung nach Anspruch 1, dadurch gekennzeichnet, dass das Polyamid ein Produkt auf der Basis von Laurinlactam ist.

3. Verfahren zum Herstellen einer Rohrleitung nach einem der Ansprüche 1 oder 2, dadurch gekennzeichnet, dass vor dem Extrudieren des Polyamids das vorher mit der Außenverzinkung und der Olivchromatierung versehene Stahlrohr bis auf eine an die Extrusionstemperatur des Polyamids angeglichene Temperatur erhitzt wird, in diesem angeglichenen Temperaturzustand das Polyamid direkt auf das Stahlrohr extrudiert wird und die dabei gewonnene Rohrleitung in einem Flüssigkeitsbad abgeschreckt wird.

## Claims

1. Tubing for a brake system, fuel system or hydraulic system for use in automotive vehicles, having an inside steel tube (1) having an outer zinc coating layer (3) an additional outwardly oriented olive-chromated layer (5) which is enclosed by a plastic jacket layer (7), characterized in that in the transition region of the olive-chromated layer (5) and the plastic jacket layer (7) an interlocked layer (9) is formed, and that the interlocked layer (9) is a layer made of polyamide, extruded on the olive-chromated layer (5).

2. Tubing as according to claim 1, characterized in that the polyamide is a laurinlactam based product.

3. Method for manufacturing a tubing according to one of claims 1 and 2, characterized that prior to the extrusion of the polyamid, the steel tube having a zinc coating on the outwardly oriented surface and the olive-chromated layer is heated to a temperature adjusted to the extrusion temperature of the polyamide, and the polyamid is extruded onto the heated steel tube directly and the so coated pipe is quenched in a liquid bath after the extrusion step.

## Revendications

1. Conduite rigide pour un système de freinage, de carburant ou de circuit hydraulique disposé dans des véhicules automobiles, comprenant un tube interne en acier (1) qui comporte une galvanisation externe (3) comportant un finissage olive de chromate (5) qui est entouré d'une gaine en matière synthétique (7), caractérisée en ce que, dans la zone de transition entre le finissage olive de chromate (5) et la gaine en matière synthétique (7), on forme une couche de denture (9) et en ce que ta gaine en matière synthétique (7) est une couche de polyamide déposée directement sur le finissage olive de chromate (5) par extrusion.

2. Conduite rigide selon la revendication 1, caractérisée en ce que le polyamide est un produit à base de lactame laurique.

3. Procédé pour la fabrication d'une conduite rigide selon l'une des revendications 1 ou 2, caractérisée en ce que, avant l'extrusion du polyamide, on chauffe le tube en acier muni de la galvanisation externe et du finissage olive de chromate jusqu'à une température égalïsée avec la température d'extrusion du polyamide, en ce que, dans cet état de température, on extrude le polyamide directement sur le tube en acier et en ce que l'on trempe la conduite rigide ainsi obtenue dans un bain de liquide.
